# EUROPÄISCHE PATENTSCHRIFT

(11) **EP 2 651 661 B1**
(45) Veröffentlichungstag und Bekanntmachung des Hinweises auf die Patenterteilung: **08.08.2018**
(21) Anmeldenummer: 11784466.2
(22) Anmeldetag: 11.11.2011
(51) Int. Cl.: B60C 11/00

(54) **FAHRZEUGLUFTREIFEN**
VEHICLE TIRE
PNEU DE VEHICULE

(30) Priorität: 16.12.2010 DE 102010061287
(43) Veröffentlichungstag der Anmeldung: 23.10.2013
(73) Patentinhaber: Continental Reifen Deutschland GmbH, 30165 Hannover (DE)
(72) Erfinder: SENG, Matthias, 30449 Hannover (DE)
(74) Vertreter: Preusser, Andrea
(86) Internationale Anmeldenummer: PCT/EP2011/069907
(87) Internationale Veröffentlichungsnummer: WO 2012/079867

(56) Entgegenhaltungen:
- EP-A1- 1 837 206
- EP-A1- 2 213 481
- EP-A2- 1 016 555
- WO-A1-2011/029715
- JP-A- 63 093 604

## Beschreibung

Die Erfindung betrifft einen Fahrzeugluftreifen in radialer Bauart mit einer Radialkarkasse, einem Gürtelverband aus zumindest zwei Gürtellagen und einer diesen abdeckenden Bandage und mit einem Laufstreifen, welcher sich in radialer Richtung aus zwei, aus unterschiedlichen Gummimischungen bestehenden Schichten, einer Laufstreifencap und einer Laufstreifenbase, zusammensetzt, wobei die Laufstreifenbase schulterseitig im Wesentlich in radialer Richtung verlaufende seitliche Baseflanken aufweist, welche von je einem Seitenteil außenseitig überlappt sind, wobei in zumindest einer Reifenschulter in der Laufstreifenbase und gegebenenfalls bis in den Seitenteil reichend ein Gummieinbauteil enthalten ist, welcher aus einer Gummimischung besteht, deren Rückprallelastizität größer ist als jene der Laufstreifenbase, wobei der Gummibauteil eine Querschnittsform mit kontinuierlich dünner werdenden und auslaufenden Abschnitten aufweist, von welchen der eine in Richtung Laufstreifenmitte entlang der Bandage und der andere zum Rand der Bandage und beim Seitenteil verläuft.

Aus der EP 1 016 555 A2 ist ein gattungsgemäßer Fahrzeugluftreifen bekannt, dessen Laufstreifen aus einer radial äußeren Laufstreifencap und einer radial inneren Laufstreifenbase besteht. Die Laufstreifenbase setzt sich aus einem mittleren, zentralen Abschnitt und zwei seitlichen Abschnitten zusammen, wobei die seitlichen Abschnitte eine größere Dicke aufweisen als der zentrale Abschnitt. Der mittlere Abschnitt besteht aus einer Gummimischung, deren Härte größer ist als jene der Gummimischung in den seitlichen Abschnitten. Das Verhältnis des Verlusttangens der Gummimischung der seitlichen Abschnitte zum Verlusttangens der Gummimischung des mittleren Abschnittes beträgt höchstens 2:3. Durch diese spezielle Ausführung der Laufstreifenbase soll unter anderem auch der Rollwiderstand des Reifens verbessert werden. Die EP 2 213 481 A1 betrifft einen Reifen für ein Zweiradfahrzeug mit unterschiedlich ausgeführten Laufstreifen. Bei einer der offenbarten Ausführungsformen besteht der Laufstreifen aus einer äußeren Laufstreifencap und einer radial inneren Laufstreifenbase, die ebenfalls einen mittleren zentralen Abschnitt und zwei schulterseitige Abschnitte aufweist, wobei die schulterseitigen Abschnitte aus einer Gummimischung bestehen, deren tan δ kleiner ist als jener des zentralen Abschnittes und der Laufstreifencap. Auch hier dient diese Maßnahme der Verringerung des Rollwiderstandes.

Eine Vielzahl von Patentdokumenten befasst sich mit der Ausführung von rollwiderstandsarmen Radialreifen für Personenkraftwagen. So ist beispielsweise aus der DE 198 507 66 B4 ein Fahrzeugluftreifen mit einem Laufstreifen aus einer Laufstreifenbase und einer Laufstreifencap bekannt, wobei die Laufstreifenbase einen mittleren Bereich aus einer ersten Gummimischung und zwei beidseitig nach axial außen anschließende Bereiche aus einer zweiten Gummimischung aufweist. Die zweite Gummimischung ist härter und Hysterese reicher als die erste Gummimischung.

Aus der DE 10 2005 045 000 1A ist ein Fahrzeugluftreifen mit einem Laufstreifen aus einer Laufstreifencap und einer Laufstreifenbase bekannt, bei dem die Laufstreifenbase aus Abschnitten aus unterschiedlichen Gummimischungen besteht, wobei der Abschnitt im zentralen Bereich der Laufstreifenbase aus einer Gummimischung besteht, deren Hysterese höher ist als jene der Gummimischung der beiden seitlichen Abschnitte der Laufstreifenbase und der Gummimischung der Laufstreifencap. Durch dieses Konzept soll eine Erwärmung der Laufstreifencap durch eine Basismischung mit hoher Hysterese vom Reifeninneren her gestattet sein, um durch die höhere Betriebstemperatur die Flexibilität der Laufstreifencap zu erhöhen und die Winterperformance des Reifens zu verbessern.

Der Erfindung liegt die Aufgabe zugrunde, bei einem Reifen der eingangs genannten Art eine Reduktion des Rollwiderstandes erzielen zu können, wobei die sonstigen Eigenschaften des Reifens bzw. des Laufstreifens, insbesondere die Bremseigenschaften auf nassem Untergrund und die Handling-Eigenschaften auf trockenen Fahrbahnen, gleichermaßen erhalten bleiben sollen.

Gelöst wird die gestellte Aufgabe erfindungsgemäß dadurch, dass der Gummieinbauteil, welcher in zumindest einer Reifenschulter in der Laufstreifenbase enthalten ist, von der Gummimischung der Laufstreifenbase und gegebenenfalls von der Gummimischung des Seitenteils umgeben ist.

Gemäß der Erfindung ist daher in jenem Bereich des Laufstreifens, der sich beim Abrollen des Reifens am stärksten erwärmt, ein Gummieinbauteil angeordnet, welcher aus einer Gummimischung mit einer hohen Rückprallelastizität besteht. Durch diese Maßnahme lässt sich eine deutliche Senkung des Rollwiderstandes des Reifens erzielen. Da der Gummieinbauteil nur in einem lokal begrenzten Bereich und hauptsächlich in der Laufstreifenbase enthalten ist, bleiben die sonstigen Eigenschaften des Reifens bzw. Laufstreifens von dieser Maßnahme weitgehend unbeeinflusst.

Besonders deutlich ist die erzielbare Reduktion des Rollwiderstandes mit Gummieinbauteilen, deren Rückprallelastizität um mindestens 10 %, insbesondere um mindestens 20 %, größer ist als jene der Laufstreifenbase.

Auch die Querschnittsfläche des Gummieinbauteils spielt eine gewisse Rolle bei der mit der Erfindung erzielbaren Reduktion des Rollwiderstandes. Der Gummieinbauteil sollte eine Querschnittsfläche zwischen 8 mm² und 100 mm², insbesondere bis zu 50 mm², aufweisen.

Es ist günstig, wenn die Gummieinbauteile im Wesentlichen an den seitlichen Randbereichen der Laufstreifenbase positioniert sind. Besonders günstig sind Positionierungen, bei welchen der Gummieinbauteil sich radial außerhalb der Gürtelkante befindet und eine im Wesentlichen dem Verlauf des randseitigen Abschnittes des Gürtel bzw. der Bandage folgende Seite aufweist. Dabei ist es weiters von Vorteil, wenn der Gummieinbauteil im Querschnitt einen in Richtung Laufstreifenmitte und einen in Richtung radial inneres Ende der Baseflanke dünner werdenden Abschnitt aufweist.

In die seitlichen Randabschnitte der Laufstreifenbase lassen sich besonders gut Gummieinbauteile einbauen, welche im Wesentlichen eine dreiecksähnliche oder halbrund gestaltete Querschnittsfläche aufweisen. Möglich ist jedoch auch eine Ausführung des Gummieinbauteils mit einer sternähnlichen Querschnittsfläche oder in Streifenform.

Weitere Merkmale, Vorteile und Einzelheiten der Erfindung werden nun anhand der schematischen Zeichnung näher erläutert. Dabei zeigen
Fig. 1, Fig. 2, Fig. 5 und Fig. 6 Querschnitte eines Fahrzeugluftreifens im Laufstreifenbereich mit unterschiedlichen Ausführungsvarianten der Erfindung und
Fig. 3, Fig. 4 und Fig. 7 Querschnitte eines Fahrzeugluftreifens im Laufstreifenbereich mit weiteren Ausführungsvarianten.

Sämtliche Zeichnungsfiguren zeigen den Laufstreifenbereich eines Radialreifens für Personenkraftwagen, wobei von den üblichen Bauteilen des Reifens ein Laufstreifen 1, ein Gürtelverband bestehend aus einem zwei Gürtellagen 2a aufweisenden Gürtel 2 und einer diesen abdeckenden Bandage 3, eine Radialkarkasse 4, eine Innenschicht 5 und Seitenteile 6 dargestellt sind. Die Gürtellagen 2a bestehen in bekannter Weise aus in eine Gummimischung eingebetteten, innerhalb jeder Lage 2a parallel zueinander verlaufenden Stahlkorden, die Bandage 3, die ein- oder mehrlagig ausgeführt sein kann, weist in Gummi eingebettete und insbesondere in Umfangsrichtung verlaufende Festigkeitsträger, beispielsweise aus Nylon, auf. Der Laufstreifen 1 ist, wie es ebenfalls bekannt ist, aus einer radial äußeren Gummischicht, einer Laufstreifencap 7, und einer radial inneren Gummischicht, einer Laufstreifenbase 8, aufgebaut. Die Laufstreifenbase 8 weist eine Dicke von etwa 2 mm bis 3 mm auf und erstreckt sich schulterseitig bis zu den beiden Seitenteilen 6. Die Seitenteile 6 überlappen außenseitig die im Wesentlichen in radialer Richtung verlaufenden seitlichen Baseflanken 8a. Der Laufstreifen 1 ist mit Nuten, Einschnitten und dergleichen profiliert, wobei in den Zeichnungsfiguren lediglich Umfangsnuten 9 eingezeichnet sind. Die beiden Seitenteile 6 sind entweder Bestandteile - die radial äußeren Abschnitte - der Seitenwandteile des Fahrzeugluftreifens oder sogenannte Wings der Laufstreifencap 7, wobei Wings üblicherweise aus einer von der Laufstreifencap 7 abweichenden Gummimischung bestehen, insbesondere aus der Gummimischung der Seitenwandteile des Reifens.

Die Gummimischung für die Laufstreifencap 7 und die Gummimischung für die Laufstreifenbase 8 können aus einer für Cap- und Baseteile von Laufstreifen üblichen, bekannten Gummimischung bestehen. Dabei weist die Laufstreifencap 7 eine niedrigere Rückprallelastizität auf als die Laufstreifenbase 8.

Es ist bekannt, dass sich beim Abrollen von Radialreifen für Personenkraftwagen die in den beiden Schulterbereichen unmittelbar radial außerhalb der Gürtelkanten befindlichen Laufstreifenbereiche am stärksten erwärmen. Diese Erwärmung ist nachteilig für den Rollwiderstand des Reifens. Um in diesen Bereichen des Laufstreifens die Energieaufnahme deutlich zu reduzieren und damit den Rollwiderstand des Reifens zu senken, ist gemäß der Erfindung in diesen Bereichen jeweils ein Gummieinbauteil 10, 10', 10" mit einer sehr hohen Rückprallelastizität, demnach einer sehr geringen Energieaufnahme bei Verformung, eingebaut. Die schulterseitigen Gummieinbauteile 10, 10', 10" bestehen aus einer Gummimischung, welche eine Rückprallelastizität (gemäß ISO 4662:2009) aufweist, die um mindestens 10 %, insbesondere um mindestens 20 %, höher ist als die Rückprallelastizität (gemäß ISO 4662:2009) der Gummimischung der Laufstreifenbase. Erreicht wird die hohe Rückprallelastizität insbesondere und, wie an sich bekannt, durch eine Gummimischung, welche einen sehr hohen Anteil an Naturkautschuk und/oder Butadienkautschuk aufweist und eher niedrig gefüllt ist. Optional kann die Gummimischung für den Gummieinbauteil 10, 10', 10" faserverstärkt sein und Kurzfasern (Nylon, Rayon, Aramid und dergleichen) enthalten.

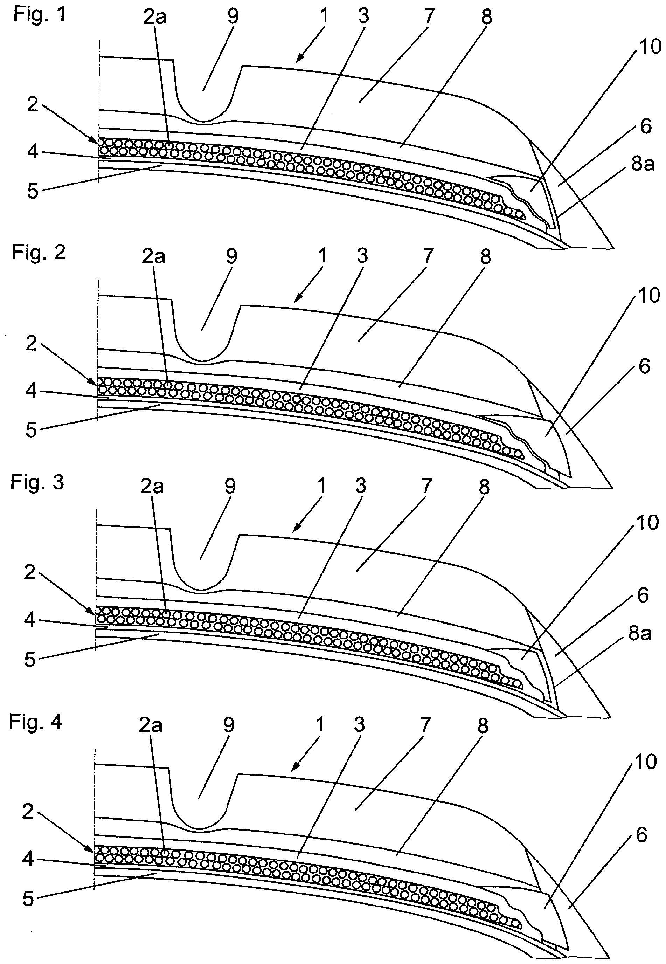

Die Figuren 1 bis 7 zeigen unterschiedliche Ausführungsvarianten von schulterseitigen Gummieinbauteilen 10, 10', 10" und deren bevorzugten Anordnungen in den Schulterbereichen des Reifens. Die Gummieinbauteile 10, 10', 10" sind derart in den Schulterbereichen positioniert, dass sie auch bei einem Abrieb des Laufstreifens auf Mindestprofiltiefe nicht bis zur Lauffläche (bodenberührende Fläche der Laufstreifencap 7) reichen.

Bei der in Fig. 1 gezeigten Ausführungsvariante befinden sich die Einbauteile 10 in den schulterseitigen Randabschnitten der Laufstreifenbase 8 und weisen einen etwa dreieckigen Querschnitt auf, wobei die längste Dreieckseite im Wesentlichen dem Verlauf der seitlichen Randabschnitte der Bandage 3 folgt, eine weitere Seite im Wesentlichen parallel zur Baseflanke 8a und die dritte Seite im Wesentlichen in axialer Richtung verläuft. Der Gummieinbauteil 10 überdeckt somit den Bereich der Gürtelkanten und läuft zwischen der Bandage 3 und dem Seitenteil 6 sowie Richtung Laufstreifenmitte spitzwinkelig aus. Bei der in Fig. 1 gezeigten Ausführungsvariante ist der Gummieinbauteil 10 in die Gummimischung der Laufstreifenbase 8 eingebettet, wobei an seinen dem Seitenteil 6 und der Bandage 3 zugewandten Dreieckseiten jeweils nur eine sehr dünne Schicht der Laufstreifenbase 8, insbesondere in der Größenordnung von 0,5 mm Dicke, vorhanden ist.

Fig. 2 zeigt eine Ausführungsvariante mit einem weitgehend analog zu Fig. 1 ausgeführten, im Querschnitt etwa dreieckigen Gummieinbauteil 10, welcher in den Seitenteil 6 hineinragt. Zwischen der entlang der Bandage 3 verlaufenden Seite des Gummieinbauteils 10 und der Bandage 3 befindet sich eine dünne Schicht der Laufstreifenbase 8.

Die in Fig. 3 ausgeführte Ausführungsform unterscheidet sich von jener gemäß Fig. 1 dadurch, dass der schulterseitige Gummieinbauteil 10 in Kontakt mit der Bandage 3 positioniert ist. Bei der in Fig. 4 gezeigten Ausführungsvariante ragt der schulterseitige Gummieinbauteil 10 in den Seitenteil 6 hinein und steht in Kontakt mit der Bandage 3.

Die in den Figuren 1 bis 4 dargestellten Gummieinbauteile 10 weisen eine Querschnittsform mit kontinuierlich dünner werdenden und "auslaufenden" Abschnitten auf, von welchen der eine in Richtung Laufstreifenmitte entlang der Bandage 3 und der andere zum Rand der Bandage 3 und beim Seitenteil 6 verläuft. Dabei ist auch eine halbrunde Querschnittsform des Einbauteils 10 möglich.

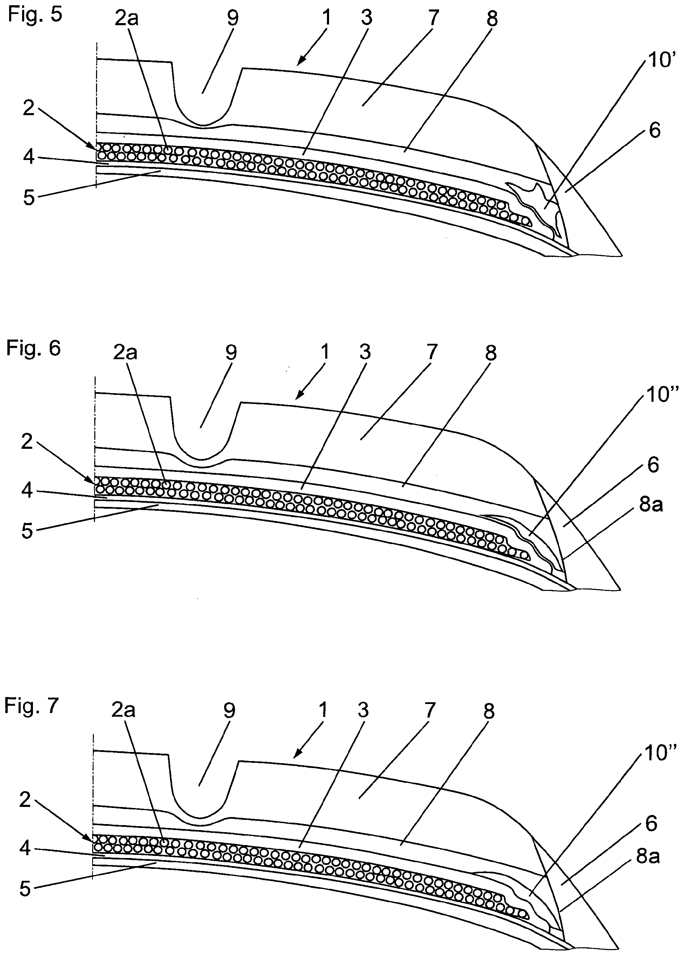

Bei der in Fig. 5 gezeigten Ausführungsform weist der schulterseitige Gummieinbauteil 10' einen stemähnlichen Querschnitt mit einer entlang des schulterseitigen Endabschnittes der Bandage 3 verlaufenden Seite auf, wobei eine dünne Schicht der Laufstreifenbase 8 zwischen der Bandage 3 und dem Einbauteil 10' vorhanden ist. Der Gummieinbauteil 10' kann auch in Kontakt mit der Bandage 3 angeordnet sein. Eine Anzahl fingerartig abstehender Abschnitte des Gummieinbauteils 10' ragen in die Laufstreifenbase 8, vorzugsweise zum Teil auch in den Seitenteil 6.

Bei den in Fig. 6 und Fig. 7 gezeigten Ausführungsvarianten ist ein Gummieinbauteil 10" in Streifenform vorgesehen, welcher entlang des schulterseitigen Endabschnittes der Bandage 3 verläuft und eine Breite von 1 mm bis 2 mm (Breite geringer als Base!) aufweist. Der streifenförmige Gummieinbauteil 10" ist direkt auf der Bandage 3 positioniert, wie es Fig. 7 zeigt. Es kann jedoch auch zwischen dem streifenförmigen Einbauteil 10" und der Bandage 3 eine dünne Schicht des Gummimaterials der Laufstreifenbase 8 vorhanden sein, wie es in Fig. 6 dargestellt ist.

Die in den Figuren gezeigten schulterseitigen Gummieinbauteile 10. 10', 10" weisen Querschnittsflächen auf, welche zwischen 8 mm² und 100 mm², insbesondere bis zu 50 mm², betragen.

Bei Gürtelreifen ohne Bandage 3 können gemäß der Erfindung vorgesehene Gummieinbauteile 10, 10', 10" auf analoge Weise angeordnet und ausgeführt sein.

Die Erfindung ist auf die dargestellten und beschriebenen Ausführungsvarianten nicht eingeschränkt. Insbesondere kann der Gummieinbauteil auch andere Querschnittsformen, beispielsweise trapezähnliche, ellipsenähnliche und dergleichen aufweisen.

### Bezugszeichenliste

1 ............. Laufstreifen
2 ............. Gürtel
2a .............Gürtellage
3 ............. Bandage
4 ............. Radialkarkasse
5 ............. Innenschicht
6 ............. Seitenteil
7 ............. Laufstreifencap
8 ............. Laufstreifenbase
8a ............. Baseflanke
9 ............. Umfangsnut
10............ schulterseitiger Gummieinbauteil
10' ............ schulterseitiger Gummieinbauteil
10" .......... schulterseitiger Gummieinbauteil

## Patentansprüche

1. Fahrzeugluftreifen in radialer Bauart mit einer Radialkarkasse (4), einem Gürtelverband (2) aus zumindest zwei Gürtellagen (2a) und einer diesen abdeckenden Bandage (3) und mit einem Laufstreifen (1), welcher sich in radialer Richtung aus zwei, aus unterschiedlichen Gummimischungen bestehenden Schichten, einer Laufstreifencap (7) und einer Laufstreifenbase (8), zusammensetzt, wobei die Laufstreifenbase (8) schulterseitig im Wesentlich in radialer Richtung verlaufende seitliche Baseflanken (8a) aufweist, welche von je einem Seitenteil (6) außenseitig überlappt sind, wobei in zumindest einer Reifenschulter in der Laufstreifenbase (8) und gegebenenfalls bis in den Seitenteil (6) reichend ein Gummieinbauteil (10, 10', 10") enthalten ist, welcher aus einer Gummimischung besteht, deren Rückprallelastizität größer ist als jene der Laufstreifenbase (8), wobei der Gummibauteil (10, 10', 10") eine Querschnittsform mit kontinuierlich dünner werdenden und auslaufenden Abschnitten aufweist, von welchen der eine in Richtung Laufstreifenmitte entlang der Bandage (3) und der andere zum Rand der Bandage (3) und beim Seitenteil (6) verläuft,
**dadurch gekennzeichnet,**
**dass** der Gummieinbauteil (10, 10', 10"), welcher in zumindest einer Reifenschulter in der Laufstreifenbase (8) enthalten ist, von der Gummimischung der Laufstreifenbase (8) und gegebenenfalls von der Gummimischung des Seitenteils (6) umgeben ist.

2. Fahrzeugluftreifen nach Anspruch 1, **dadurch gekennzeichnet, dass** die Rückprallelastizität des Gummieinbauteils (10, 10', 10") um mindestens 10 %, insbesondere um mindestens 20 %, größer ist als jene der Laufstreifenbase (8).

3. Fahrzeugluftreifen nach Anspruch 1 oder 2, **dadurch gekennzeichnet, dass** der Gummieinbauteil (10, 10', 10") eine Querschnittsfläche von 8 mm² bis 100 mm², insbesondere von bis zu 50 mm², aufweist.

4. Fahrzeugluftreifen nach einem der Ansprüche 1 bis 3, **dadurch gekennzeichnet, dass** der Gummieinbauteil (10) radial außerhalb der Gürtelkante positioniert ist und eine im Wesentlichen den Verlauf des randseitigen Abschnittes des Gürtels (2) bzw. der Bandage (3) folgende Seite aufweist.

5. Fahrzeugluftreifen nach einem der Ansprüche 1 bis 4, **dadurch gekennzeichnet, dass** der Gummieinbauteil (10) im Querschnitt einen in Richtung radial inneres Ende der Baseflanke (8a) dünner werdenden Abschnitt aufweist.

6. Fahrzeugluftreifen nach einem der Ansprüche 1 bis 5, **dadurch gekennzeichnet, dass** der Gummieinbauteil (10) eine dreiecksähnliche oder halbrund gestaltete Querschnittsfläche aufweist.

7. Fahrzeugluftreifen nach einem der Ansprüche 1 bis 5, **dadurch gekennzeichnet, dass** der Gummieinbauteil (10') eine sternähnliche Querschnittsfläche aufweist.

8. Fahrzeugluftreifen nach einem der Ansprüche 1 bis 5, **dadurch gekennzeichnet, dass** der Gummieinbauteil (10") eine Streifenform aufweist.

## Claims

1. Pneumatic vehicle tyre of a radial type of construction, with a radial carcass (4), a breaker belt assembly (2) comprising at least two belt plies (2a) and a bandage (3) covering the latter and with a tread rubber (1), which is made up in the radial direction of two layers consisting of different rubber compounds, a tread cap (7) and a tread base (8), wherein the tread base (8) has on the shoulder side lateral base flanks (8a), which run in the radial direction and are each overlapped on the outside by a side part (6), wherein, in at least one tyre shoulder, a rubber insert (10, 10', 10''), which consists of a rubber compound of a greater rebound resilience than that of the tread base (8), is contained in the tread base (8) and possibly reaches as far as into the side part (6), wherein the rubber component (10, 10', 10'') has a cross-sectional form with continuously tapering and running-out portions, one of which runs along the bandage (3) in the direction of the middle of the tread rubber and the other of which runs to the edge of the bandage (3) and at the side part (6),
**characterized**
**in that** the rubber insert (10, 10', 10''), which in at least one tyre shoulder is contained in the tread base (8), is surrounded by the rubber compound of the tread base (8) and possibly by the rubber compound of the side part (6).

2. Pneumatic vehicle tyre according to Claim 1, **characterized in that** the rebound resilience of the rubber insert (10, 10', 10'') is greater than that of the tread base (8) by at least 10%, in particular by at least 20%.

3. Pneumatic vehicle tyre according to Claim 1 or 2, **characterized in that** the rubber insert (10, 10', 10'') has a cross-sectional area of 8 mm² to 100 mm², in particular of up to 50 mm².

4. Pneumatic vehicle tyre according to one of Claims 1 to 3, **characterized in that** the rubber insert (10) is positioned radially outside the edge of the breaker belt and has a side that substantially follows the progression of the edge-side portion of the breaker belt (2) or of the bandage (3).

5. Pneumatic vehicle tyre according to one of Claims 1 to 4, **characterized in that** the rubber insert (10) has in cross section a portion tapering in the direction of the radially inner end of the base flank (8a).

6. Pneumatic vehicle tyre according to one of Claims 1 to 5, **characterized in that** the rubber insert (10) has a triangle-like or semicircle-shaped cross-sectional area.

7. Pneumatic vehicle tyre according to one of Claims 1 to 5, **characterized in that** the rubber insert (10') has a star-like cross-sectional area.

8. Pneumatic vehicle tyre according to one of Claims 1 to 5, **characterized in that** the rubber insert (10'') has the form of a strip.

## Revendications

1. Pneu de véhicule en construction radiale comprenant une carcasse radiale (4), un assemblage de nappe d'armature (2) composé d'au moins deux couches de nappe d'armature (2a) et d'un bandage (3) qui recouvre celles-ci et comprenant une surface de contact au sol (1) qui, dans le sens radial, est constituée de deux couches composées de mélanges de caoutchouc différents, d'un chapeau de surface de contact au sol (7) et d'une base de surface de contact au sol (8), la base de surface de contact au sol (8) possédant côté épaulement des flancs de base (8a) latéraux qui s'étendent sensiblement dans la direction radiale, lesquels sont respectivement recouverts du côté extérieur par une partie latérale (6), un composant intégré en caoutchouc (10, 10', 10'') étant contenu dans au moins un épaulement de pneu dans la base de surface de contact au sol (8) et s'étendant éventuellement jusque dans la partie latérale (6), lequel composant intégré en caoutchouc est composé d'un mélange de caoutchouc dont l'élasticité de rebondissement est supérieure à celle de la base de surface de contact au sol (8), le composant en caoutchouc (10, 10', 10'') possédant une forme de section transversale avec des portions qui deviennent continuellement plus minces et s'étalent, parmi lesquelles l'une s'étend en direction du centre de la surface de contact au sol le long du bandage (3) et l'autre jusqu'au bord du bandage (3) et au niveau de la partie latérale (6),
**caractérisé en ce que**
le composant intégré en caoutchouc (10, 10', 10''), qui est contenu dans au moins un épaulement dans la base de surface de contact au sol (8), est entouré par le mélange de caoutchouc de la base de surface de contact au sol (8) et éventuellement par le mélange de caoutchouc de la partie latérale (6).

2. Pneu de véhicule selon la revendication 1, **caractérisé en ce que** l'élasticité de rebondissement du composant intégré en caoutchouc (10, 10', 10'') est supérieure d'au moins 10 %, notamment d'au moins 20 % à celle de la base de surface de contact au sol (8).

3. Pneu de véhicule selon la revendication 1 ou 2, **caractérisé en ce que** le composant intégré en caoutchouc (10, 10', 10'') présente une aire transversale de 8 mm² à 100 mm², notamment maximale de 50 mm².

4. Pneu de véhicule selon l'une des revendications 1 à 3, **caractérisé en ce que** le composant intégré en caoutchouc (10) est positionné dans le sens radial à l'extérieur de l'arête de la nappe d'armature et possède un côté qui suit sensiblement le tracé de la portion côté bord de la nappe d'armature (2) ou du bandage (3).

5. Pneu de véhicule selon l'une des revendications 1 à 4, **caractérisé en ce que** le composant intégré en caoutchouc (10) possède, en section transversale, une portion qui devient plus mince en direction de l'extrémité intérieure radiale du flanc de base (8a).

6. Pneu de véhicule selon l'une des revendications 1 à 5, **caractérisé en ce que** le composant intégré en caoutchouc (10) possède une aire de section transversale similaire à un triangle ou de forme demi-ronde.

7. Pneu de véhicule selon l'une des revendications 1 à 5, **caractérisé en ce que** le composant intégré en caoutchouc (10') possède une aire de section transversale similaire à une étoile.

8. Pneu de véhicule selon l'une des revendications 1 à 5, **caractérisé en ce que** le composant intégré en caoutchouc (10'') présente une forme de bande.
